# EUROPEAN PATENT SPECIFICATION

(11) **EP 0 838 751 B1**
(45) Date of publication and mention of the grant of the patent: **30.08.2017**
(21) Application number: 97305193.1
(22) Date of filing: 14.07.1997
(51) Int. Cl.: G06F 3/00, G06F 3/033

(54) **Interactive desktop system with adjustable image capture**
Interaktives Desktopsystem mit Verstellbarer Bildaufnahme
Système interactif de bureau avec capture d'image ajustable

(30) Priority: 12.07.1996 GB 9614837
(43) Date of publication of application: 29.04.1998
(73) Proprietor: Xerox Corporation, Rochester, NY 14644 (US)
(72) Inventor: Wellner, Pierre, Allenhurst, NJ07711 (US); Flynn, Michael John, Cambridge CB2 2RN (GB); Carter, Kathleen A., Cambridge CB5 8HH (GB); Newman, William, Cambridge (GB)
(74) Representative: Grünecker Patent- und Rechtsanwälte PartG mbB

(56) References cited:
- EP-A- 0 622 722
- US-A- 4 942 538
- US-A- 5 227 896
- US-A- 5 305 427

## Description

This invention relates to a document processing system in which a user manipulates documents interactively via using a camera positioned above a desk, and more particularly to such a system having adjustable image capture.

It is known from EP-A-495 622 to use a camera-projector arrangement positioned above a desk, in order to enable a user to select functions to be performed by selecting items located within the field of view of the camera. A video camera or scanner is used to capture images of documents on a desk, and feedback information is displayed by means of a projection display. The functions include calculating and translating operations carried out on data (e.g., in a paper document) located on the desk.
US-A-5 227 896 describes an image reader for a device such as a scanner. An optical pickup means is provided which is adjustable by performing rotation around a vertical as well as a horizontal axis. A zooming function is provided for adjusting resolution. Since high resolution is generally not available for a large field of view, an original is segmented into pieces that are captured separately. Subsequently, the segments are synthesized to form a complete image.

EP-A-622,722 discloses a system for generating new documents from originals containing text and/or images employing e.g. a camera-projector system focused on a work surface, in conjunction with a copier or printer. In use, the camera captures various manual operations carried out by the user, e.g. by pointing with fingers and tapping on the surface on the text or images in an original paper document on the surface and representing manipulations of the text or images. Feedback to the user is provided by projection of an image onto the surface or onto the original, or using some other visual display.

A problem with the system of EP-A-622,722 is that its use of a camera and projector which are fixedly mounted on office furniture, bookshelves or the ceiling is that it is very bulky, difficult to set up, and difficult to move. For practical purposes, many potential users would find it impossible to set up over their existing desks. Another problem is the limited field of view of the camera and the fact that it is inconvenient to zoom it and point it at different locations on the desk.

A further problem with the system of EP-A-622,722 is that the projector has a limited resolution and a limited range, and there is a trade-off between the two. Some applications (.e.g. fine sketching or handwriting) require high resolution per square inch, while other applications (e.g. Architectural visualisation) require a large surface area. Any given projection must sacrifice one for the other. One aspect of this invention concerns an interaction technique and input device that addresses the area/resolution trade-off.

A further problem arises through the low resolution of the images produced by the video cameras of the above-described systems (which are based on current standard video technology) compared with that of printers and scanners. This leads to low accuracy when recognising the text of selections, and poor quality when printing selections. When the user is working with relatively small selections at a time (words or drawings less than a few inches across), then one approach to solving this problem is to zoom the camera to focus only on the area of interest. The problem then is how to control the camera. One approach is to have the user manually adjust the camera zoom before making a selection, but this requires an extra step, extra controls, and a monitor of some sort so that the user can see "through the camera". It would be desirable to have a system that could automatically control the camera to zoom in as tightly as possible on the area selected by the user.
This is achieved by the features of the independent claims.

An advantage of this system is its compatibility with existing office equipment, and provision of a very natural interaction technique for controlling the zoom factor and where the camera and projector point (discussed further below in section B).

With existing technology, if the zooming and position of the projector are controllable at all by the user, the controls are independent from the size and view of the image projected. This forces the user to select a trade-off between size and resolution which once made, is difficult to change. The technique according to the invention makes it easy to move smoothly between all possible values of this trade-off, so the limitations of any particular position are less of a problem. This technique could be compared to the techniques of navigating in a virtual world (e.g. flight simulation) but is the opposite in a way. Instead of showing a different view, according to the user's position in the computer's virtual world, what is shown is a different view according to the computer's position in the user's real world.

Preferably, the processing means includes: means for determining from a captured image whether the predetermined form is horizontally centred within the field of view of said image capture device, and if not, for causing the image capture device to pan until the predetermined form is horizontally centred; and/or means for determining from a captured image whether the predetermined form is vertically centred within the field of view of said image capture device, and if not, for causing the image capture device to tilt until the predetermined form is vertically centred.

Preferably, the processing means includes: means for determining from a captured image whether the predetermined form is fully visible within the field of view of said image capture device, and if so, for causing the image capture device to electronically zoom in until the predetermined form is no longer fully visible; and means for determining, after the predetermined form is no longer fully visible, from a captured image whether the predetermined form is fully visible within the field of view of said image capture device, and if not, for causing the image capture device to electronically zoom out until the predetermined form is just fully visible.

The predetermined form may comprise a selection rectangle shaped by a user, and said elements comprise the side of said rectangle.

This technique has the advantage that a user can simply select an area on the work surface and the image capture device (camera) is automatically panned, zoomed, and/or tilted into position so that the selected area is just within its field of view - enhancing resolution of the captured image in the selected area.

The display device preferably comprises a video projector. Alternatively, the display device may comprise a desk-mounted VDU, such as a CRT monitor, or a flat panel display, such as a LCD display. Preferably, the image capture device comprises a video camera.

Embodiments of the invention will now be described, by way of example, with reference to the accompanying drawings, in which:
Figure 1 shows a view of the overall system according to one embodiment of the invention;
Figure 2 is a schematic block diagram of the computer used in the system of Fig. 1;
Figure 3 illustrates an alternative embodiment employing mirror-based projection in accordance with the invention; and
Figure 4 shows a further embodiment of the invention employing a lamp housing movable in three dimensions, for projecting a display of variable size and resolution;
Figures 5 shows a further embodiment, similar to that of Fig. 4, but maintaining the projected display in a different orientation;
Figure 6 is a flow chart illustrating the processing steps used in the systems of Figs 4 and 5;
Figure 7 is a view of the work surface illustrating a further embodiment of the invention accomplishing automatic pan/tilt/zoom of the camera to user-selected areas on the work surface; and
Figure 8 is a flow chart illustrating the processing steps used in the system of Fig. 7.

### A. Basic System Configuration

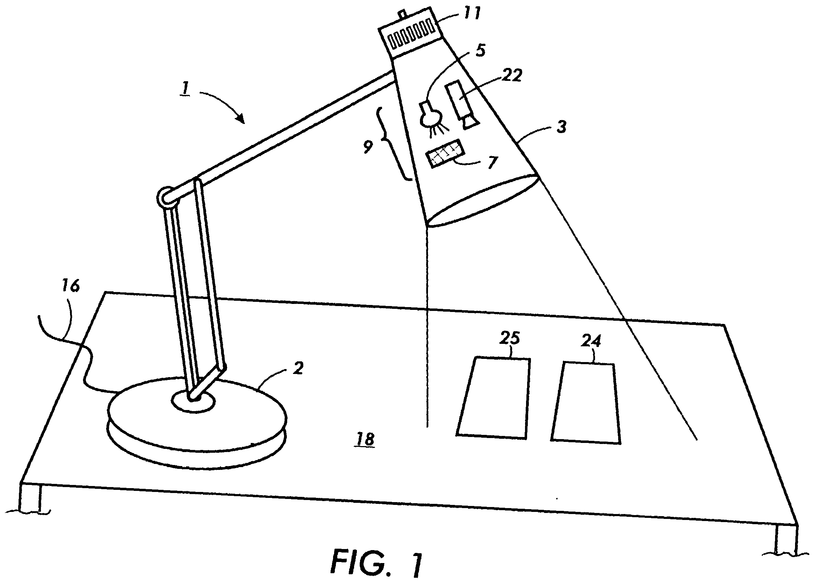

The general system configuration according to the invention, employing a video camera and projector positioned above and focused on a work surface 18, is illustrated in Fig. 1. The system 1 takes the general form of a conventional desk lamp, with the camera 22 and video projector 9 (comprising bulb 5 and LCD matrix 7) being mounted within lamp housing 3. The base housing 2, which is suitably larger than that for a conventional lamp, provides a housing for computer hardware, for example having a standard microcomputer (PC) architecture. (Alternatively, the processing hardware may be packaged in a standard desktop PC housing, with the base housing 2 being similar to a standard desk lamp, and the camera 22 and projector 9 being coupled to appropriate ports of the desktop PC by suitable cables (not shown).) It will be appreciated by persons skilled in the art that the invention may be implemented using a computer running Windows™ and equipped with a frame grabber board and appropriate interfacing circuitry (see, for example, Jahne B., Digital Image Processing, Appendix B, Springer-Verlag, Heidelberg, 1991).

Alternatively, the hardware configuration described in detail in published European application EP-A-622,722, may be employed except that only interfacing circuitry is provided in housing 2, which is in turn connected to the remote processing system. The camera 22 and video projector 9 are then connected to image processing hardware described in detail in that application.

In another alternative, the housing may contain only the camera 22, with the system being implemented as described in commonly-owned GB patent application No. 9614694.9 (Agent's ref: R/96007), filed concurrently herewith.

In implementing the present invention, image processing techniques described in EP-A-622,722 may be used, modified, as appropriate and/or as described below.

The computer is coupled to a network cable 16, which in conjunction with a conventional internal driver card (not shown) and appropriate software (such as Netware, available from Novell Corp.) enable the computer to form part of a local (LAN) or wide area network (WAN), as is well known in the art.

The lamp housing 3 is suitably arranged to be movable in three dimensions, exactly in the manner of a conventional angle-poise lamp, enabling the camera 22 and projector 9 to be moved towards and away from the desk surface 18 as desired for particular operations (in Fig. 1 the angle that the line of sight of the camera/projector makes with the vertical is exaggerated, for the purpose of illustration). As shown, a real paper document 24 is within the field of view of the camera 22, and an electronic document 25 is projected by video projector 9 on to the surface 18. At the top of the lamp housing 3 is further provided a rotary zoom control 11, similar to that provided on conventional SLR and video cameras, but electronically linked to the computer processor so as to enable the user to perform control of the zoom setting of the camera 22.

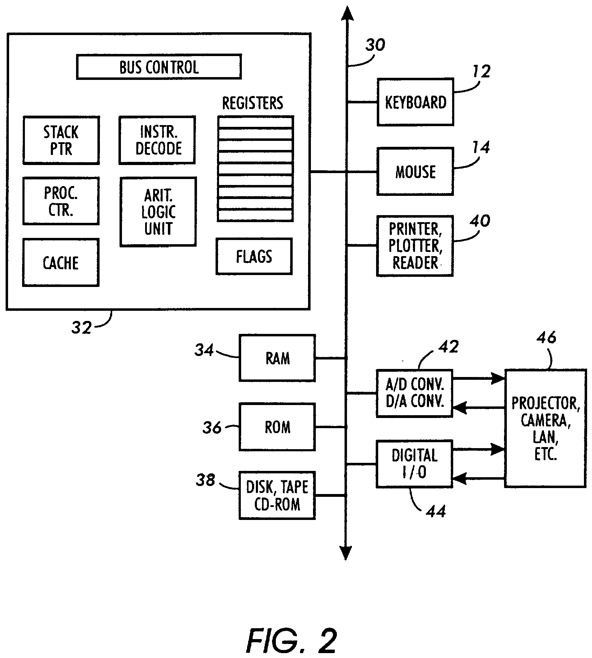

The hardware of the computer system 1 is schematically shown in Fig. 2. The configuration is well known to persons skilled in the art and, for example, is described in detail in The Art of Electronics, 2nd Edn, Ch. 10, P. Horowitz and W. Hill, Cambridge University Press, 1989. Stated briefly, the system comprises, connected to common bus 30, a central processing unit 32, memory devices including random access memory (RAM) 34, read only memory (ROM) 36 and disk, tape or CD-ROM drives 38, keyboard 12 (not shown), mouse 14 (not shown), printing, plotting or scanning devices 40, and A/D, D/A devices 42 and digital input/output devices 44 providing interfacing to external devices 46 such as camera 22, video projector 9 and the rest of the LAN (not shown).

In use, the video camera 22 captures images of the desk-surface 18 and these images are displayed in real-time by the video projector 9 on the desk surface 18.

The system must maintain a mapping between the pixels in the camera's field of view and the pixels of the display. This mapping will change as the angle of the lamp housing 3 with respect to the desk changes, so either this angle must be kept fixed, or a quick self-calibration procedure (see, for example, EP-A-622,722, or GB patent application 95 210 72.0) can be used.

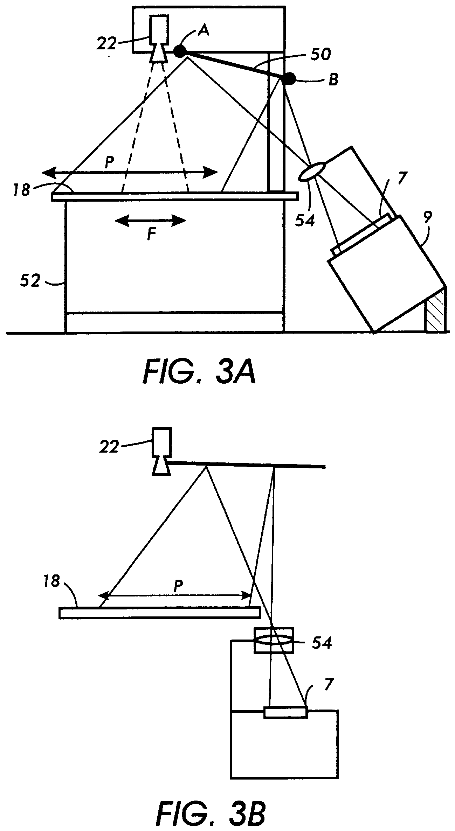

A further embodiment of the invention is illustrated in Fig.3(a). This embodiment is the same as the first-mentioned embodiment, except as described below. The system addresses a problem encountered with a system employing a camera 22 to scan documents lying on the desk 52, and a video projector 9 to display feedback information onto the desk surface 18, i.e. the integration of the video projector 9, which is necessarily bulky due to the size of its LCD array, projection light source and cooling fans, with the camera 22 that scans the desk.

The solution is to attach a mirror 50 to the underside of the camera housing, and to mount the projector 9 separately, pointing upwards at the mirror 50. Here, the projector 9 may take the form of a standard overhead projector having a lens 54 for use in adjusting focus; and the LCD panel 7 is disposed on the upper surface of the projector. The angle of inclination of the projector is exaggerated. As a result the image (having width P) is projected back down onto the same region (having width F) of the desk as is scanned by the camera. The projector may be positioned behind the desk, or under the desk projecting up through a hole, as shown in Fig. 3(a). The mirror 50 is hinged at A and a screw adjustment at B allows the angle of the mirror 50 to be adjusted so that the image is projected on the appropriate part of the desk surface 18.

The image must be reversed to counter the effects of reflection by a single mirror 50. Most projectors and LCD panels having this reversal capability built in. Also, steps may need to be taken to minimise the keystoning (foreshortening) distortion and focusing problems caused by the image being projected at an angle to the vertical. Again, some self-contained projectors include the means to displace the lens with respect to the LCD array 7 that generates the image. This may be sufficient to eradicate keystoning altogether, as shown in Fig. 3(b), and at the same time to bring the entire image into focus. A small amount of keystoning can be tolerated by the user without difficulty.

### B. Projecting a display of arbitrary size, position and resolution

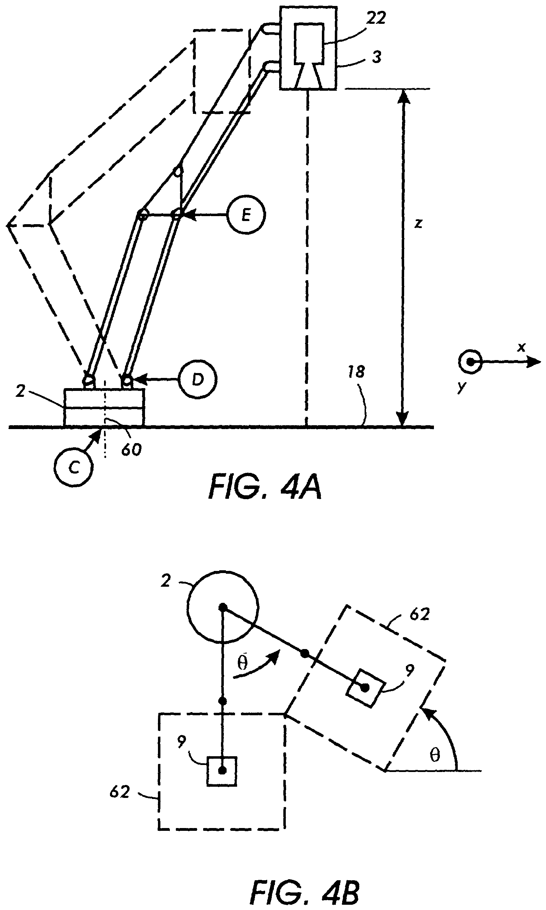

Figure 4 illustrates a further embodiment of the invention: this is exactly the same as the first-mentioned embodiment, except as described below.

In this embodiment, the lamp housing 3 is preferably restricted to being directed straight down (i.e. the angle of the optical axis of the camera 22 and projector 9 to the vertical is zero: it is perpendicular to the desk surface 18). (In an embodiment where this angle is variable (see, e.g. Fig. 1) an inverse projective transformation is required to produce an undistorted image).

In this embodiment, the lamp base 2 is configured such that the system (and therefore the lamp housing 3) can rotate about an axis 60.

Provision is made for sensing not only the vertical distance z from the lamp housing 3 to the desk surface 18, but the horizontal position of the lamp housing 3 in two dimensions. For this purpose, shaft encoders (which output electrical signals indicative of (change of) angular position) are provided at points C, D and E. It will be appreciated that alternative means may be used for measuring the distance z: an ultrasonic transducer such as are employed in autofocus cameras may be used, disposed on the lamp housing 3.

As seen in Fig. 4(b), which shows a plan view, using the swivel base 2 means that the display region 62 rotates as the system is swivelled. This is compensated for by applying the reverse rotation (-θ) to the image before displaying it.

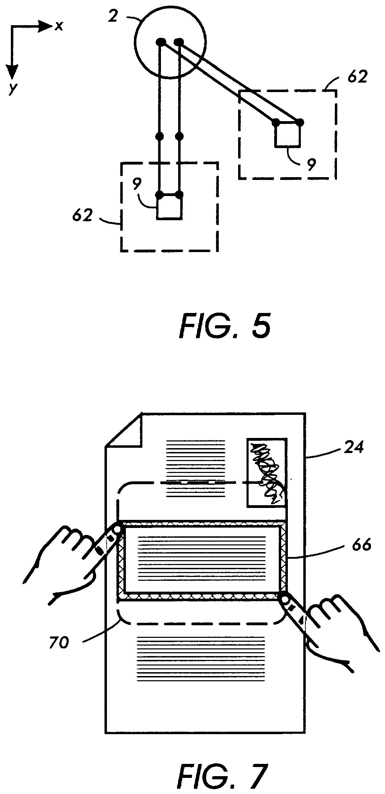

(A further alternative embodiment is illustrated in Fig. 5: this is the same as in Fig. 4, except that a more complex double linkage is used which maintains the display region 62 orthogonal to the desk).

In the embodiments of Figs. 4 and 5, as the distance z from the desk surface 18 varies, the focus of the projector 9 must be maintained. In accordance with this aspect of the invention, adjustment is made automatically based on measured changes in z.

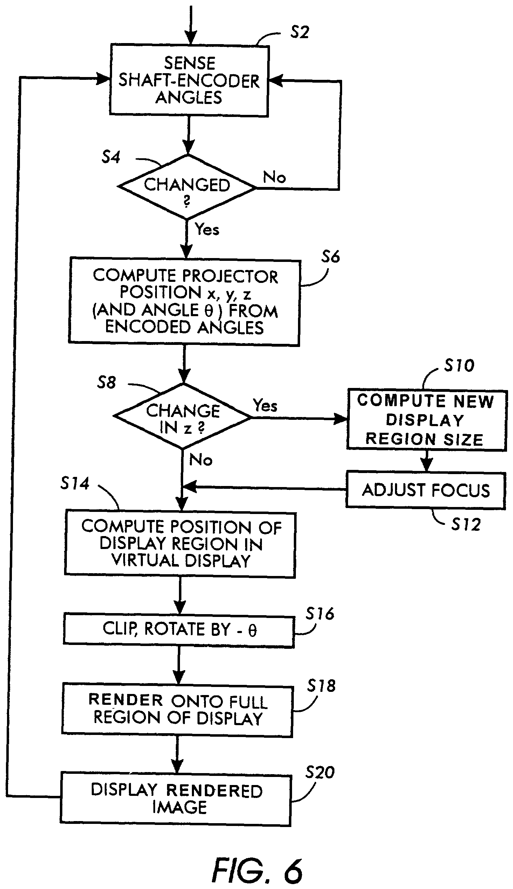

Figure 6 is a flow chart of the processing steps involved in adjusting the displayed (projected) image following an alteration (change in x, y or z in the co-ordinate system of Figs. 4 and 5) of the position of the lamp housing 3 by the user. In Fig. 6, allowance is made for varying θ (Fig. 4), but for the embodiment of Fig. 5, θ = 0.

As can been seen in Fig. 6, initially (step s2), the angles at the shaft encoders are sensed. If a changes in the angle(s) is detected (step s4), computations are performed (based on well known geometric relations) to determine from the shaft encoder angles the projector's position (x, y, z, (and 0)) in the 3-D space. If it is determined (step s8) that a change in vertical position (z) has taken place, further calculations are performed, based n the new value of z and the relevant geometric relations, to compute (step s10) the size of the new display region. The focus for the projector is then adjusted (step s12) by a corresponding amount to ensure a sharp image. Next, at step s14, the position of the display region in the virtual display is computed, and then a rotation of -θ is then performed the counteract any detected rotation θ. Then (step s18), operations are performed to render the display region onto the full region of the display, and the rendered image displayed (step s20).

The system maintains a virtual projected surface that is of arbitrarily large size and arbitrarily high resolution. At any given moment the projector is displaying a portion of this surface at a particular resolution. The user is given the impression of arbitrary size and resolution because he or she can move the projector (or zoom it) closer to the desk and virtual objects stay the same size but are displayed with more pixels per inch. The size of the area can be made bigger by zooming (or moving) away, or the projector can be moved to the area that needs to be seen. This system is ideally suited to the system of Figs. 1,4 and 5, where the user can "light up" any part of the virtual surface area desired by moving the lamp around. Then any area can be inspected to arbitrarily high resolution by moving the lamp closer. It is believed that this interaction technique would be familiar and very easy to learn. The only hardware required in addition is the sensors so the system knows how far it and its angle is from the surface it is projecting on.

### C. Automatic pan/zoom to selections on the desktop

A further embodiment of the invention will now be discussed with reference to Fig. 7: this is exactly the same as the previous embodiments, except as described below. According to this embodiment, the camera 22 is provided with an electronically controllable zoom, and the system provides automatic control of the camera's zoom by projecting a feedback rectangle 66 that is also usable (detectable) by the system itself. The projected selection rectangle 66 is suitably of a predetermined grey level enabling its position to be determined. Alternatively, within the individual sides of the selection rectangle may be included coded information (e.g., glyph codes: see, for example, US-A-5,168,147; US-A-5,091,066; and US-A-5,128,525).

According to this technique, when the system can "see" the (whole of) the selection rectangle 66 that the user positions on the paper document 24 within the camera's field of view 70, then it dynamically zooms in the camera until just before it can't "see" it anymore. If the system can't "see" rectangle 66, then it zooms the camera out until it is visible.

Panning is done in a similar way: when one of the sides of the rectangle 66 cannot be seen within the field of view 70, then the camera is panned (by electronic control of the camera's angular orientation) until the side can be seen. Preferably, only certain border regions of the field of view 70, instead processed to determine the presence of the rectangle 66, thereby improving processing speed.

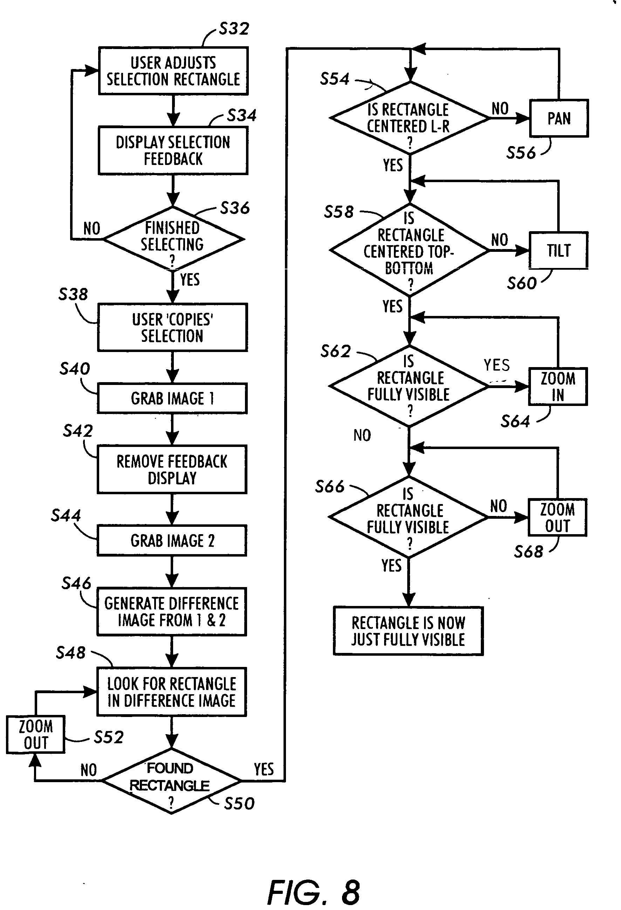

Figure 8 is a flow chart illustrating the processing step in performing the above described panning and zoom operations in accordance with this aspect of the invention.

Initially (step s32), inputs defining the user's adjustment of the (size/location of the) selection rectangle are received, and the accordingly-modified selection rectangle continuously displayed (step s34) as feedback. If it is determined (step s36) that the user has finished selecting (adjusting), and the user chooses to 'copy' what is within the selection rectangle (step s38), the image (IMAGE1) currently within the camera field of view is grabbed (step s40). Then, the displayed (feedback) rectangle is removed (step s42) from the displayed image, and the image (IMAGE2) now within the camera field of view grabbed (step s44). An operation is then performed (step s46) to generate from IMAGE1 and IMAGE2 a difference image.

Using the difference image, the position of the selection rectangle within that image is searched for (step s48), using well known pattern recognition techniques. If the rectangle is not detected (step s50), the camera is zoomed out by a predetermined amount, and step s48 repeated. This continuous in a stepwise fashion until the rectangle is detected at step s50.

Then, an analysis is made (step s54) of whether the rectangle is centred (as between left and right) within the camera field of view, and if not, stepwise panning in the appropriate direction carried out (step s56) until it is detected (step s54) that the rectangle is centred.

Then, an analysis is made (step s58) of whether the rectangle is centred (as between top and bottom) within the camera field of view, and if not, stepwise panning in the appropriate direction carried out (step s60) until it is detected (step s58) that the rectangle is centred.

Then, an analysis is made (step s62) of whether the rectangle is fully visible within the camera field of view, and if so, stepwise zooming-in carried out (step s64) until it is detected (step s62) that the rectangle is no longer fully visible.

Then, an analysis is made (step s66) of whether the rectangle is fully visible within the camera field of view, and if not, stepwise zooming-out carried out (step s68) until it is detected (step s66) that the rectangle is fully visible. Thus, the point is reached where the rectangle is now just fully visible.

## Claims

1. An interactive desktop system comprising:
a work surface (18),
an image capture device (22) for capturing an image, said image capture device having a field of view (70) including a selected area of said work surface (18);
a display device (9) for displaying a feedback image (66) on the selected area of said work surface (18) by projecting the feedback image (66) from above the work surface (18), the feedback image (66) indicating to a user the captured image;
electronically controllable adjustment means for adjusting the field of view (70) of said image capture device (22) by performing pan and zoom functions; and
processor means (32) coupled to said image capture device (22) and said display device (9),
**characterized in that**
said processor means (32) being adapted to
generate a difference image from a first image and a second image captured by said image capture device (22), wherein said first image being captured while the feedback image (66) is being displayed on the selected area of said work surface (18), and the second image being captured while the feedback image (66) is not being displayed on the selected area of said work surface (18);
search for the feedback image (66) in the difference image; and
control the pan and zoom functions of said adjustment means to center the feedback image (66) within the field of view (70) of the image capture device (22) such that the feedback image (66) is just fully visible within the field of view (70) of the image capture device (22), when the feedback image (66) is found in the difference image.

2. A system according to claim 1, wherein said adjustment means performing said pan and/or zoom functions in response to a user adjustment of said feedback image (66).

3. A system according to claim 1 or 2, wherein said processor means (32) being adapted to control the pan function to pan the field of view (70) of the image capture system (22) until the feedback image (66) is centered left to right within the difference image; and to tilt the field of view (70) of the image capture system (22) until the feedback image (66) is centered top to bottom within the difference image.

4. A system according to any of claims 1 to 3, wherein the adjustment means includes means for adjusting, in response to user action, a property of images (25) displayed by said display means (9).

5. A method of scanning relevant portions of a source document (24) positioned on a work surface with an image capture system (22), comprising the steps of:
displaying (S34) a feedback image (66) on the source document (24) by projecting the feedback image (66) from above the work surface, the feedback image (66) indicating to a user the captured image;
capturing (S40) a first image in a field of view (70) of the image capture system (22) while a feedback image (66) is being displayed on the source document (24);
capturing (S44) a second image in the field of view (70) of the image capture system (22) while the feedback image (66) is not being displayed on the source document (24);
generating (S46) a difference image from the first image and the second image;
searching (S48, S50, S52) for the feedback image (66) in the difference image; and, when the feedback image (66) is found in the difference image
analyzing (S54, S58) whether the feedback image (66) is centred within the field of view (70) of the image capture system (22), and, if not
adjusting (S56, S60,) an electronically controllable pan function of said image capture system (22) to center the feedback image (66) within the field of view (70) of the image capture system (22);
analyzing (S62, S66) whether the feedback image (66) is fully visible within the field of view (70) of the image capture system (22), and, if not
adjusting (S64, S68) an electronically controllable zoom function of said image capture system (22) such that the feedback image (66) is just fully visible within the field of view (70) of the image capture system (22).

6. A method according to claim 5, wherein said steps of capturing (S40, S44) a first and a second image, generating (S46) a difference image, searching (S48, S50, S52), analyzing (S56, S60, S62, S66) and adjusting (S56, S60, S64, S68) are performed in response to a user adjustment (S32) of said feedback image (66).

7. The method of claim 5 or 6, further comprising the step of adjusting the zoom function to stepwisely zoom out (S52) the field of view (70) of the image capture system (22) until the feedback image (66) is found in the difference image.

8. The method of any of claims 5 to 6, wherein said step of adjusting an electronically controllable pan function comprises the substeps of:
adjusting the pan function to pan (S56) the field of view (70) of the image capture system (22) until the feedback image (66) is centered left to right within the difference image; and
adjusting the pan function to tilt (S60) the field of view (70) of the image capture system (22) until the feedback image (66) is centered top to bottom within the difference image.

## Patentansprüche

1. Interaktives Arbeitsplatzsystem, umfassend:
eine Arbeitsfläche (18),
eine Bildaufnahmeeinrichtung (22) zum Aufnehmen eines Bildes, wobei die Bildaufnahmeeinrichtung ein Sichtfeld (70) hat, welches einen ausgewählten Bereich der Arbeitsfläche (18) enthält;
eine Anzeigeeinrichtung (9) zum Anzeigen eines Feedback-Bildes (66) auf dem ausgewählten Bereich der Arbeitsfläche (18) durch Projizieren des Feedback-Bildes (66) von oberhalb der Arbeitsfläche (18), wobei das Feedback-Bild (66) einem Benutzer das aufgenommene Bild anzeigt;
eine elektronisch steuerbare Einstelleinrichtung zum Einstellen des Sichtfeldes (70) der Bildaufnahmeeinrichtung (22) durch Ausführen von Schwenk-und Zoomfunktionen; und
eine Prozessoreinrichtung (32), gekoppelt mit der Bildaufnahmeeinrichtung (22) und der Anzeigeeinrichtung (9),
**dadurch gekennzeichnet, dass**
die Prozessoreinrichtung (32) eingerichtet ist, um
ein Differenzbild aus einem ersten Bild und einem zweiten Bild, aufgenommen von der Bildaufnahmeeinrichtung (22), zu erzeugen, wobei das erste Bild aufgenommen wird, während das Feedback-Bild (66) auf dem ausgewählten Bereich der Arbeitsfläche (18) angezeigt wird und das zweite Bild aufgenommen wird, während das Feedback-Bild (66) nicht auf dem ausgewählten Bereich der Arbeitsfläche (18) angezeigt wird;
nach dem Feedback-Bild (66) in dem Differenzbild zu suchen; und
die Schwenk-und Zoomfunktionen der Einstelleinrichtung zu steuern, um das Feedback-Bild (66) innerhalb des Sichtfeldes (70) der Bildaufnahmeeinrichtung (22) zu zentrieren, so dass das Feedback-Bild (66) gerade voll innerhalb des Sichtfeldes (70) der Bildaufnahmeeinrichtung (22) sichtbar ist, wenn das Feedback-Bild (66) in dem Differenzbild gefunden wird.

2. System nach Anspruch 1, wobei die Einstelleinrichtung die Schwenk-und/oder Zoomfunktionen in Reaktion auf eine Benutzereinstellung des Feedback-Bildes (66) ausführt.

3. System nach Anspruch 1 oder 2, wobei die Prozessoreinrichtung (32) eingerichtet ist, die Schwenkfunktion zu steuern, um das Sichtfeld (70) des Bildaufnahmesysterns (22) zu schwenken, bis das Feedback-Bild (66) innerhalb des Differenzbildes links-rechts zentriert ist und das Sichtfeld (70) der Bildaufnahmeeinrichtung (22) zu neigen, bis das Feedback-Bild (66) innerhalb des Differenzbildes oben-unten zentriert ist.

4. System nach einem der Ansprüche 1 bis 3, wobei die Einstelleinrichtung eine Einrichtung enthält zum Einstellen einer Eigenschaft von durch die Anzeigeeinrichtung (9) angezeigten Bildern (25), in Reaktion auf eine Benutzerhandlung.

5. Verfahren zum Scannen relevanter Teilbereiche eines Quelldokuments (24), welches auf einer Arbeitsfläche positioniert ist, mit einem Bildaufnahmesystem (22), umfassend die Schritte:
Anzeigen (S34) eines Feedback-Bildes (66) auf dem Quelldokument (24) durch Projizieren des Feedback-Bildes (66) von oberhalb der Arbeitsfläche, wobei das Feedback-Bild (66) einem Benutzer das aufgenommene Bild anzeigt;
Aufnehmen (S40) eines ersten Bildes in dem Sichtfeld (70) des Bildaufnahmesystems (22), während ein Feedback-Bild (66) auf dem Quelldokument (24) angezeigt wird;
Aufnehmen (S44) eines zweiten Bildes in dem Sichtfeld (70) des Bildaufnahmesystems (22), während das Feedback-Bild (66) nicht auf dem Quelldokument (24) angezeigt wird;
Erzeugen (S46) eines Differenzbildes aus dem ersten Bild und dem zweiten Bild;
Suchen (S48, S50, S52) nach dem Feedback-Bild (66) in dem Differenzbild; und, wenn das Feedback-Bild (66) in dem Differenzbild gefunden wurde
Analysieren (S54, S58), ob das Feedback-Bild (66) innerhalb des Sichtfeldes (70) des Bildaufnahmesystems (22) zentriert ist, und, wenn nicht,
Einstellen (S56, S60) einer elektronisch steuerbaren Schwenkfunktion des Bildaufnahmesystems (22), um das Feedback-Bild (66) innerhalb des Sichtfeldes (70) der Bildaufnahmeeinrichtung (22) zu zentrieren;
Analysieren (S62, S66), ob das Feedback-Bild (66) voll innerhalb des Sichtfeldes (70) der Bildaufnahmeeinrichtung (22) sichtbar ist, und, wenn nicht,
Einstellen (S64, S68) einer elektronisch steuerbaren Zoomfunktion des Bildaufnahmesystems (22) so dass das Feedback-Bild (66) gerade voll innerhalb des Sichtfeldes (70) der Bildaufnahmeeinrichtung (22) sichtbar ist.

6. System nach Anspruch 5, wobei die Schritte des Aufnehmens (S40, S44) eines ersten und eines zweiten Bildes, des Erzeugens (S46) eines Differenzbildes, des Suchens (S48, S50, S52), des Analysierens (S56, S60, S62, S66) und des Einstellens (S56, S60, S64, S68) in Reaktion auf eine Benutzereinstellung (S32) des Feedback-Bildes (66) ausgeführt werden.

7. Verfahren nach Anspruch 5 oder 6, weiterhin umfassend den Schritt des Einstellens der Zoomfunktion, um das Sichtfeld (70) des Bildaufnahmesystems (22) schrittweise herauszuzoomen (S52), bis das Feedback-Bild (66) in dem Differenzbild gefunden wird.

8. Verfahren nach einem der Ansprüche 5 bis 6, wobei der Schritt des Einstellens einer elektronisch steuerbaren Schwenkfunktion die Teilschritte umfasst:
Einstellen der Schwenkfunktion, um das Sichtfeld (70) des Bildaufnahmesystems (22) zu schwenken (S56), bis das Feedback-Bild (66) innerhalb des Differenzbildes links-rechts zentriert ist; und
Einstellen der Schwenkfunktion, um das Sichtfeld (70) der Bildaufnahmeeinrichtung (22) zu neigen (S60), bis das Feedback-Bild (66) innerhalb des Differenzbildes oben-unten zentriert ist.

## Revendications

1. Système de bureau interactif qui comprend :
une surface de travail (18),
un dispositif de capture d'image (22) pour capturer une image, dans lequel ledit dispositif de capture d'image a un champ de vision (70) qui inclut une zone sélectionnée de ladite surface de travail (18) ;
un dispositif d'affichage (9) pour afficher une image de rétrocontrôle (66) sur la zone sélectionnée de ladite surface de travail (18) en projetant l'image de rétrocontrôle (66) à partir du dessus de la surface de travail (18), dans lequel l'image de rétrocontrôle (66) indique à un utilisateur l'image capturée ;
des moyens d'ajustement pouvant être commandés électroniquement pour ajuster le champ de vision (70) dudit dispositif de capture d'image (22) en exécutant des fonctions de balayage et de grossissement ; et
des moyens formant processeur (32) couplés au dit dispositif de capture d'image (22) et au dit dispositif d'affichage (9),
**caractérisé en ce que**
lesdits moyens formant processeur (32) sont adaptés pour
générer une image de différence à partir d'une première image et d'une deuxième image capturées par ledit dispositif de capture d'image (22), dans lequel ladite première image est capturée alors que l'image de rétrocontrôle (66) est affichée sur la zone sélectionnée de ladite surface de travail (18), et la deuxième image est capturée alors que l'image de rétrocontrôle (66) n'est pas affichée sur la zone sélectionnée de ladite surface de tramail (18) ;
rechercher l'image de rétrocontrôle (66) dans l'image de différence ; et
commander les fonctions de balayage et de grossissement desdits moyens d'ajustement pour centrer l'image de rétrocontrôle (66) dans le champ de vision (70) du dispositif de capture d'image (22) de sorte que l'image de rétrocontrôle (66) soit juste totalement visible dans le champ de vision (70) du dispositif de capture d'image (22), lorsque l'image de rétrocontrôle (66) est trouvée dans l'image de différence.

2. Système selon la revendication 1, dans lequel lesdits moyens d'ajustement effectuent lesdites fonctions de balayage et/ou de grossissement en réponse à un ajustement par l'utilisateur de ladite image de rétrocontrôle (66).

3. Système selon la revendication 1 ou 2, dans lequel lesdits moyens formant processeur (32) sont adaptés pour commander la fonction de balayage pour balayer le champ de vision (70) du système de capture d'image (22) jusqu'à ce que l'image de rétrocontrôle (66) soit centrée dans la direction gauche-droite dans l'image de différence ; et pour incliner le champ de vision (70) du système de capture d'image (22) jusqu'à ce que l'image de rétrocontrôle (66) soit centrée dans la direction haut-bas dans l'image de différence.

4. Système selon l'une quelconque des revendications 1 à 3, dans lequel les moyens d'ajustement comprennent des moyens pour ajuster, en réponse à une action de l'utilisateur, une propriété des images (25) affichées par lesdits moyens d'affichage (9).

5. Procédé de balayage de parties pertinentes d'un document source (24) positionné sur une surface de travail avec un système de capture d'image (22), qui comprend les étapes :
d'affichage (S34) d'une image de rétrocontrôle (66) sur le document source (24) en projetant l'image de rétrocontrôle (66) à partir du dessus de la surface de travail, dans lequel l'image de rétrocontrôle (66) indique à un utilisateur l'image capturée ;
de capture (S40) d'une première image dans un champ de vision (70) du système de capture d'image (22) alors qu'une image de rétrocontrôle (66) est affichée sur le document source (24) ;
de capture (S44) d'une deuxième image dans le champ de vision (70) du système de capture d'image (22) alors que l'image de rétrocontrôle (66) n'est pas affichée sur le document source (24) ;
de génération (S46) d'une image de différence à partir de la première image et de la deuxième image ;
de recherche (S48, S50, S52) de l'image de rétrocontrôle (66) dans l'image de différence ; et, lorsque l'image de rétrocontrôle (66) est trouvée dans l'image de différence,
d'analyse (S54, S58) si l'image de rétrocontrôle (66) est centrée dans le champ de vision (70) du système de capture d'image (22), et, si ce n'est pas le cas,
d'ajustement (S56, S60) d'une fonction de balayage pouvant être commandée électroniquement dudit système de capture d'image (22) pour centrer l'image de rétrocontrôle (66) dans le champ de vision (70) du système de capture d'image (22) ;
d'analyse (S62, S66) si l'image de rétrocontrôle (66) est totalement visible dans le champ de vision (70) du système de capture d'image (22), et, si ce n'est pas le cas,
d'ajustement (S64, S68) d'une fonction de grossissement pouvant être commandée électroniquement dudit système de capture d'image (22) de sorte que l'image de rétrocontrôle (66) soit juste totalement visible dans le champ de vision (70) du système de capture d'image (22).

6. Procédé selon la revendication 5, dans lequel lesdites étapes de capture (S40, S44) de première et deuxième images, de génération (S46) d'une image de différence, de recherche (S48, S50, S52), d'analyse (S56, S60, S62, S66) et d'ajustement (S56, S60, S64, S68) sont effectuées en réponse à un ajustement par l'utilisateur (S32) de ladite image de rétrocontrôle (66).

7. Procédé selon la revendication 5 ou 6, qui comprend en outre l'étape d'ajustement de la fonction de grossissement pour élargir par pas (S52) le champ de vision (70) du système de capture d'image (22) jusqu'à ce que l'image de rétrocontrôle (66) soit trouvée dans l'image de différence.

8. Procédé selon l'une quelconque des revendications 5 et 6, dans lequel ladite étape d'ajustement d'une fonction de balayage pouvant être commandée électroniquement comprend les étapes secondaires :
d'ajustement de la fonction de balayage pour balayer (S56) le champ de vision (70) du système de capture d'image (22) jusqu'à ce que l'image de rétrocontrôle (66) soit centrée dans la direction gauche-droite dans l'image de différence ; et
d'ajustement de la fonction de balayage pour incliner (S60) le champ de vision (70) du système de capture d'image (22) jusqu'à ce que l'image de rétrocontrôle (66) soit centrée dans la direction haut-bas dans l'image de différence.
